# EUROPÄISCHE PATENTSCHRIFT

(11) **EP 0 769 422 B1**
(45) Veröffentlichungstag und Bekanntmachung des Hinweises auf die Patenterteilung: **22.03.2000**
(21) Anmeldenummer: 96117039.6
(22) Anmeldetag: 24.10.1996
(51) Int. Cl.: B60R 13/08, G10K 11/172, B62D 25/16

(54) **Schallabsorbierende Radlaufabdeckung**
Sound absorbing wheel-housing cover
Coquille de garde-boue absorbant le son

(30) Priorität: 28.10.1995 DE 19540259
(43) Veröffentlichungstag der Anmeldung: 23.04.1997
(73) Patentinhaber: Continental Aktiengesellschaft, 30165 Hannover (DE)
(72) Erfinder: Folchert, Uwe, Dr.-Ing., 30989 Gehrden (DE); Veit, Ivar, Dr.-Ing., 64564 Nauheim (DE); Fischer, Uwe, Dipl.-Ing., 30823 Garbsen (DE); Dodt, Thomas, Dr., 30455 Hannover (DE)

(56) Entgegenhaltungen:
- GB-A- 2 024 380
- GB-A- 2 027 255
- GB-A- 2 242 876
- GB-A- 2 265 875

## Beschreibung

Die Erfindung betrifft eine Radlaufabdeckung an Rädern und/oder Achsen von Kraftfahrzeugen, insbesondere von Lkw, mit auf der dem Rad zugewandten Seite angeordneten Kammern, wobei die Kammern zur Bildung von Helmholtz-Resonatoren mit einer Abdeckung versehen sind, die eine im wesentlichen ebene Oberfläche und jeder Kammer zugeordnet mindestens eine Durchbrechung aufweist.

Derartige Radlaufabdeckungen dienen der Verminderung des von einem fahrenden Kraftfahrzeugs verursachten Reifen-/Fahrbahngeräuschs, das bei Pkw-Reifen in einem Frequenzbereich von ca. 500 - 2000 Hz, bei einem LKW in einem Frequenzbereich von ca. 400 bis 1200 Hz liegt, und sind aus dem Stand der Technik bereits bekannt.

So wird in der DE 42 41 518 C1, die dem Oberbegriff des Anspruchs 1 entspricht, eine im Radgehäuse eines Kraftfahrzeuges befestigte Umkleidung vorgestellt, die als ein doppelwandiges und formstabiles Flächengebilde ausgestaltet ist und die ein System von Helmholtz-Resonatoren aufweist. Diese bekannte Vorrichtung wirkt als passiver Schallabsorber und umfaßt eine Abdeckung, die dem Rad zugewandt ist, und eine dem Radkasten zugewandte Rückwand. Die dem Rad zugewandte Abdeckung weist Durchbrechungen in Form von kreisrunden Bohrungen auf, die einen Durchmesser von 1 bis 14 mm haben. Die übrige Oberfläche der Abdeckung ist im wesentlichen eben, wodurch gewährleistet wird, daß sich auch während einer langen Gebrauchsdauer keine Verunreinigungen durch Spritzwasser etc. ablagern können. Ferner ist die ebene Oberfläche der Abdeckung unempfindlich gegen Steinschlag.

Es ist jedoch bekannt, daß mit kreisrunden Bohrungen versehenen Helmholtz-Resonatoren ohne zusätzliche Dämpfung nur eine sehr schmalbandige Wirkung haben, die für eine Verminderung des Reifen-/Fahrbahngeräusches ungeeignet ist. Dies liegt einerseits daran, daß das Reifen-/Fahrbahngeräusch üblicherweise breitbandig ist, so daß mit schmalbandigen Absorbern nur ein kleiner Teil im Spektrum absorbiert werden kann. Andererseits ändert sich das Frequenzspektrum mit der Fahrgeschwindigkeit, so daß schmalbandige Absorber nur bei einer bestimmten Geschwindigkeit eine gute Absorption ermöglichen.

Wohl aus diesem Grunde ist in der DE 42 41 518 C1 bereits vorgeschlagen worden, die Bohrungen in der Abdeckung mit einer Vliesschicht zu überdecken, die einen Strömungswiderstand von 400 bis 1500 Ns/m³ aufweist. Eine derartige Abdeckung der Bohrungen führt zu erhöhten Reibungsverlusten der bewegten Luftmasse und damit zu einer breitbandigen Absorption der einzelnen Helmholtz-Resonatoren. Im Alltagsgebrauch setzen sich jedoch die Poren der Vliesschicht mit Verunreinungen zu, so daß die Funktion der Helmholtz-Resonatoren zumindest beeinträchtigt wird. Darüber hinaus kann die Vliesschicht durch Steinschlag beschädigt werden, was letztendlich auch die Funktion der Helmholtz-Resonatoren beeinträchtigt.

Zusammengefaßt muß festgestellt werden, daß die aus der DE 42 41 518 C1 bekannte Radlaufabdeckung zur Verminderung des Reifen-/Fahrbahngeräusches nur bedingt geeignet ist, da einerseits unabgedeckte Helmholtz-Resonatoren eine zu schmalbandige Wirkung haben und andererseits mit einer Vliesschicht abgedeckte Helmholtz-Resonatoren den hohen Anforderungen im alltäglichen Gebrauch nicht gerecht werden.

Der Erfindung liegt die Aufgabe zugrunde, eine Radlaufabdeckung mit Helmholtz-Resonatoren vorzustellen, bei der die einzelnen Resonatoren den Schall in einem breiten Frequenzbereich gut absorbieren und die gegenüber den Alltagsbelastungen, z.B. Steinschlag, Verunreinigungen etc. unempfindlich ist.

Die Aufgabe wird gemäß dem kennzeichnenden Merkmal des Anspruchs 1 dadurch gelöst, daß die Durchbrechungen in Form von Schlitzen ausgebildet sind, deren Länge um ein Vielfaches größer ist als deren Breite.

Die mit der Erfindung erzielten Vorteile sind insbesondere darin zu sehen, daß durch die schlitzartige Ausbildung der Durchbrechungen die Dämpfung der einzelnen Helmholtz-Resonatoren erhöht wird, was zu einer breitbandigen Schallabsorption führt. Gleichzeitig weist die Abdeckung eine im wesentlichen ebene Oberfläche auf, die unempfindlich gegenüber Steinschlag, Verunreinigungen etc. ist und somit den hohen Alltagsforderungen standhält.

Darüber hinaus bringt die Ausgestaltung der Durchbrechungen in Form von schmalen Schlitzen den Vorteil mit sich, daß praktisch keine groben Verunreinigungen in die Resonatoren eindringen können.

Gemäß einem bevorzugtem Ausführungsbeispiel der Erfindung nach Anspruch 2 besteht die Abdeckung aus einem elastomeren bzw. einem biegeweichen Material. Durch eine derartige Ausgestaltung der Abdeckung wird die Alltagstauglichkeit der Radlaufabdeckung nochmals deutlich gesteigert, da sich die Schlitzwände der Schlitze relativ zueinander bewegen können.

Somit werden feine Verunreinigungen, die gegen die Abdeckung geschleudert werden, nicht dauerhaft in den Schlitzeneingeklemmt, sondern rieseln durch die Bewegung der Schlitzwände zueinander aus den Schlitzen heraus. Die Funktion der einzelnen Helmholtz-Resonatoren ist also langfristig gewährleistet.

Gemäß einer Weiterbildung der Erfindung nach Anspruch 4 weist die Abdeckung eine Dicke von 0,5 - 3 mm, vozugsweise 2 mm auf und hat somit einerseits die notwendige Stabilität und andererseits die notwendige Biegeweichheit.

Es hat sich ferner gezeigt, daß das Reifen-/Fahrbahngeräusch bei einer Breite der Schlitze von 0,2 - 1 mm, vorzugsweise 0,4 mm und einer Länge der Schlitze von 10 - 60 mm, vorzugsweise 20 - 40 mm, besonders wirkungsvoll absorbiert wird.

Weitere Vorteile der Erfindung und ein Ausführungsbeispiel werden im Zusammenhang mit den nachstehenden Figuren erläutert, darin zeigt
- Fig. 1: Rad und Radlaufabdeckung in der Seitenansicht
- Fig. 2: einen Ausschnitt aus der Radlaufabdeckung mit Kammern und Abdeckung in perspektivischer Ansicht

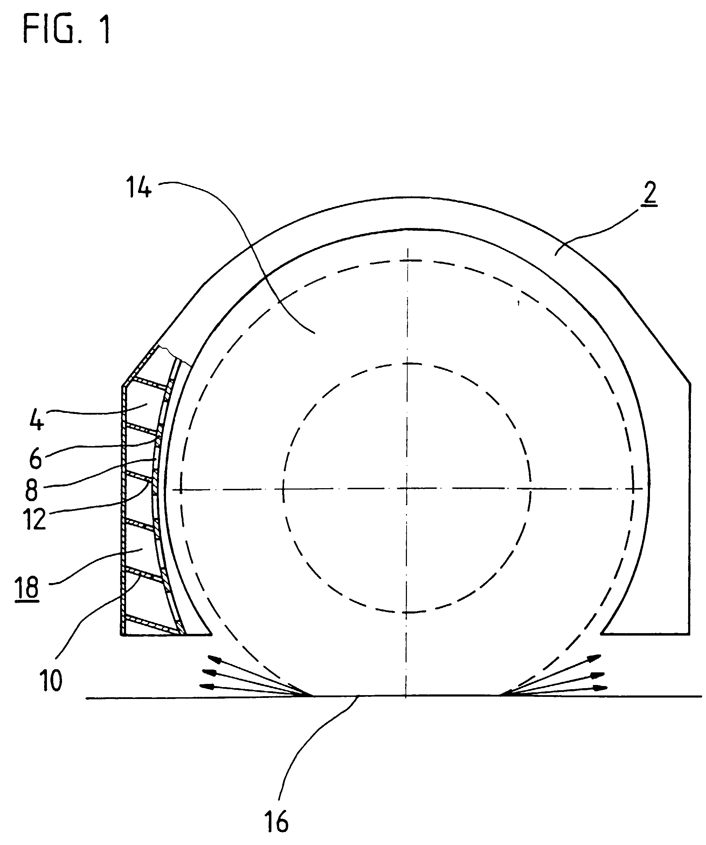

Fig. 1 zeigt ein Rad 14 mit einer Radlaufabdeckung 2, wobei für die nun folgenden Erläuterungen die Radlaufabdeckung im linken Teil der Figur aufgebrochen ist. Bei einem fahrenden Kraftfahrzeug, insbesondere bei einem fahrenden Lkw, wird im Bereich der Bodenaufstandsfläche 16 des Rades 14 ein Reifen-/Fahrbahngeräusch erzeugt, dessen Schallfeld durch die Pfeile an der Bodenaufstandsfläche 16 angedeutet ist. Zur Absorption dieses Schallfeldes enthält die Radlaufabdeckung 2 zumindest im bodennahen Bereich ein System aus Helmholtz-Resonatoren 18, die aus Kammern 4 mit einer dem Rad zugewandten Abdeckung 6 bestehen. Die Radlaufabdeckung 2 wird möglichst weit in dem bodennahen Bereich herabgezogen, damit eine möglichst große Anzahl von Helmholtz-Resonatoren möglichst nahe an der Schallquelle liegt. Hierbei ist darauf zu achten, daß die notwendige Bodenfreiheit der Radlaufabdeckung 2 nicht zu sehr eingeschränkt wird, um diese vor Beschädigungen, z.B. beim Überfahren einer Bordsteinkante etc. zu schützen. Die Güte der Absorption wird neben der Lage der einzelnen Helmholtz-Resonatoren entscheidend durch die Ausbildung der einzelnen Helmholtz-Resonatoren bestimmt.

Erfindungsgemäß wird zur Verbesserung der Absorptionseigenschaften der einzelnen Helmholtz-Resonatoren 18 vorgeschlagen, die Kammern 4 mit einer Abdeckung 6 abzudecken, die Durchbrechungen in Form von Schlitzen 8 aufweist, wobei jeder Kammer 4 mindestens ein Schlitz 8 zugeordnet ist. Durch die schlitzartige Form der Durchbrechungen 8 wird erreicht, daß die Durchbrechungen bei einer vorgegebenen Querschnittsfläche eine großflächige Wandung aufweisen und damit die Reibungsverluste der schwingenden Luftmasse an der Wandung gegenüber kreisrunden Bohrungen mit gleicher Querschnittsfläche deutlich erhöht werden. Dementsprechend wird die Dämpfung der einzelnen Helmholtz-Resonatoren erhöht, was zu einer breitbandigen Schallabsorption und somit zu einem besseren Absorptionsverhalten führt. Die Ausbildung der Durchbrechungen 8 in Form von Schlitzen bietet darüber hinaus den Vorteil, daß aufgrund der geringen Schlitzbreite keine groben Verunreinigungen in die Kammern 4 der Helmholtz-Resonatoren eindringen können. Abgesehen von den Schlitzen 8 weist die Abdeckung 6 eine ebene Oberfläche auf, so daß sie unempfindlich gegen Steinschlag etc. ist.

Vorzugsweise verlaufen die Längsseiten der Schlitze 8 in der Abdeckung 6 vertikal, so wie es auch in der Fig. 1 gezeigt ist. Dies hat den Vorteil, daß feine Verunreinigungen, die sich im Laufe der Zeit in den Schlitzen festsetzen, durch an der Abdeckung 6 herablaufendes Spritzwasser aus den Schlitzen herausgewaschen werden, so daß die Schlitze 8 über eine - wenn auch geringe - "Selbstreinigung" verfügen. Spritzwasser, das durch die Schlitze 8 in die Kammern 4 eindringt, kann durch die Abflußöffnungen 12 in den Kammerwänden 10 zum Boden hin ablaufen. Der Ablauf wird durch eine Neigung der Kammerwände 10 zum Boden hin, wie es in der Figur 1 gezeigt ist, unterstützt.

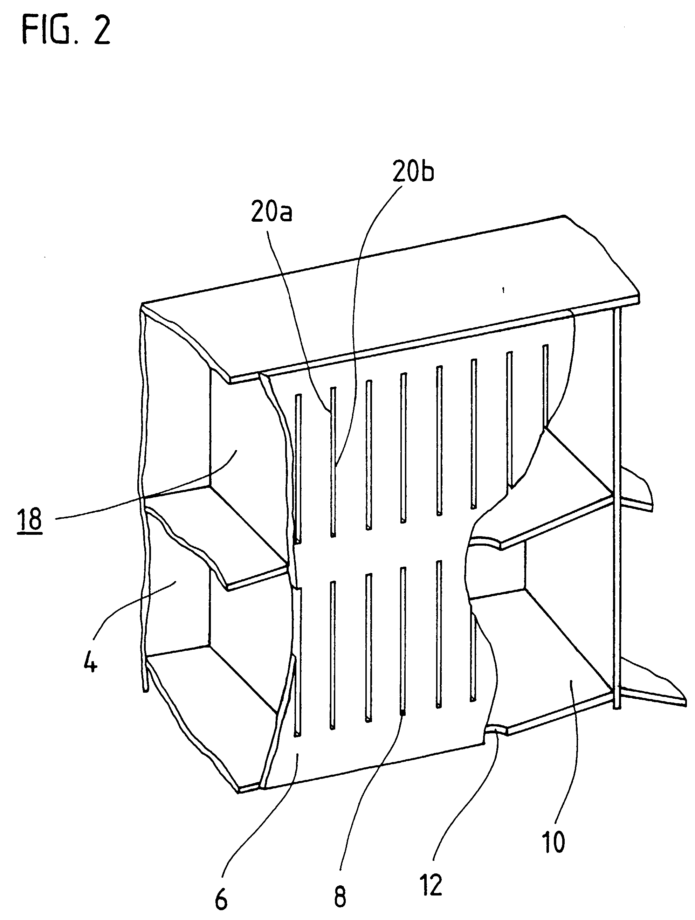

Gemäß einem besonders vorteilhaften Ausführungsbeispiel der Erfindung kann die "Selbstreinigung" der Schlitze 8 dadurch wesentlich gesteigert werden, daß die Abdeckung 6 der Kammern 4 aus einem elastomeren bzw. biegeweichen Material (z.B. Gummi oder Gummi mit Gewebeeinlagen) besteht, so daß sich die Längsseiten 20a, 20b der Schlitze 8 relativ zueinander bewegen können und somit durch diese Bewegung in den Schlitzen eingeklemmte feine Verunreinigungen herausrieseln (s. Fig. 2).

Hierbei werden Verunreinigungen, die in die Kammern 4 der Helmholtz-Resonatoren 18 fallen, im Laufe der Zeit durch Spritzwasser, das durch die Abflußöffnungen 12 abfließt, aus den Kammern 4 entfernt.

Fig. 2 zeigt einen Ausschnitt aus der Fig. 1 in perspektivischer Ansicht. Die Kammern 4 der Helmholtz-Resonatoren 18 sind mit einer Abdeckung 6 abgedeckt, die jeder Kammer 4 zugeordnet über mindestens einen Schlitz 8 verfügt. Die Resonanzfrequenz und das Absorptionsverhalten der einzelnen Helmholtz-Resonatoren kann gemäß der Helmholtzformel über das Kammervolumen der einzelnen Kammern 4 und über die Schalleintrittsfläche bzw. Querschnittsfläche der Schlitze 8 etc. beeinflußt werden. Es hat sich gezeigt, daß bei entsprechender Ausbildung des Kammervolumens der Kammern 4 eine Schlitzbreite von 0,2 bis 1mm, vorzugsweise 0,4mm und eine Schlitzlänge von 10 bis 60mm, vorzugsweise 20 bis 40mm zur Absorption des Reifen-/Fahrbahngeräusches besonders geeignet ist. Das Verhältnis der Schlitzlänge zu der Schlitzbreite beträgt somit mindestens 10.

Es hat sich ferner gezeigt, das es besonders vorteilhaft ist, wenn die Abdeckung 6 eine Dicke von 0,5 - 3mm, bevorzugt 2mm aufweist, da sie dann einerseits die notwendige Stabilität und andererseits die notwendige Biegeweichheit aufweist.

Es sei jedoch ausdrücklich darauf hingewiesen, daß die Erfindung nicht auf die angegebenen Maße beschränkt ist, vielmehr ist es dem Fachmann überlassen, welche Abmessungen für die Schlitze 8 etc. gewählt werden, um ein besonders gutes Absorptionsverhalten für einen vorgegebenen Frequenzbereich zu erhalten.

### Bezugszeichenliste

- 2: Radlaufabdeckung
- 4: Kammern der Helmholtz-Resonatoren
- 6: Abdeckung der Kammern
- 8: Schlitze in Abdeckung
- 10: Kammerwand
- 12: Abflußöffnung
- 14: Rad
- 16: Bodenaufstandsfläche
- 18: Helmholtz-Resonatoren
- 20a,b: Längsseite der Schlitze

## Patentansprüche

1. Radlaufabdeckung (2) an Rädern und/oder Achsen von Kraftfahrzeugen, insbesondere LKW, mit auf der dem Rad zugewandten Seite angeordneten Kammern (4), wobei die Kammern (4) zur Bildung von Helmholtz-Resonatoren (18) mit einer Abdeckung (6) versehen sind, die eine im wesentlichen ebene Oberfläche und jeder Kammer (4) zugeordnet mindestens eine Durchbrechung (8) aufweist,
**dadurch gekennzeichnet**,
daß die Durchbrechungen (8) in Form von Schlitzen (8) ausgebildet sind, deren Länge um ein Vielfaches größer ist als deren Breite.

2. Radlaufabdeckung nach Anspruch 1, dadurch gekennzeichnet, daß die Abdeckung (6) aus einem elastomeren bzw. biegeweichen Material besteht, so daß die Schlitzwände (20a, 20b) relativ zueinander beweglich sind.

3. Radlaufabdeckung nach Anspruch 2, dadurch gekennzeichnet, daß die Abdeckung (6) aus Gummi oder Gummi mit Gewebeeinlagen besteht.

4. Radlaufabdeckung nach einem der Ansprüche 1 bis 3, dadurch gekennzeichnet, daß die Abdeckung (6) eine Dicke von 0,5 - 3 mm, vorzugsweise 2 mm aufweist.

5. Radlaufabdeckung nach einem der Ansprüche 1 bis 4, dadurch gekennzeichnet, daß die Breite der Schlitze (8) 0,2 - 1 mm, vorzugsweise 0,4 mm und die Länge der Schlitze (8) 10 - 60 mm, vorzugsweise 20 - 40 mm beträgt.

## Claims

1. Wheel housing covering (2) for wheels and/or axles of automotive vehicles, more especially HGVs, said covering having chambers (4) which are disposed on the side facing the wheel, the chambers (4) being provided with a covering (6), for the formation of Helmholtz resonators (18), which covering has a substantially flat surface and at least one opening (8) associated with each chamber (4), characterised in that the openings (8) are configured in the form of slots (8), the length of which is greater by a multiple than the width thereof.

2. Wheel housing covering according to claim 1, characterised in that the covering (6) is formed from an elastomeric or flexible material, so that the slot walls (20a, 20b) are displaceable relative to each other.

3. Wheel housing covering according to claim 2, characterised in that the covering (6) is formed from rubber or rubber with fabric insert plies.

4. Wheel housing covering according to one of claims 1 to 3, characterised in that the covering (6) has a thickness of 0.5 - 3 mm, preferably 2 mm.

5. Wheel housing covering according to one of claims 1 to 4, characterised in that the width of the slots (8) is 0.2 - 1 mm, preferably 0.4 mm, and the length of the slots (8) is 10 - 60 mm, preferebly 20 - 40 mm.

## Revendications

1. Capot (2) de passage de roue installé près de roues ou d'essieux de véhicules automobiles, notamment de voitures de tourisme, comportant des chambres (4) situées sur le côté tourné vers la roue, dans lequel pour la formation de résonateurs de Helmholtz (18), les chambres (4) sont pourvues d'un capot (6), qui comporte une surface sensiblement plane et comporte au moins un passage (8) associé à chaque chambre (4), caractérisé en ce que les passages (8) sont agencés sous la forme de fentes (8), dont la longueur est supérieure, d'un multiple, à leur largeur.

2. Capot pour passage de roue selon la revendication 1, caractérisé en ce que le capot (6) est réalisé en un matériau élastomère ou souple en flexion, de sorte que les parois (20a,20b) des fentes sont déplaçables les unes par rapport aux autres.

3. Capot pour passage de roue selon la revendication 2, caractérisé en ce que le capot (6) est formé d'un caoutchouc ou d'un caoutchouc contenant des inserts en tissu.

4. Capot pour passage de roue selon l'une des revendications 1 à 3, caractérisé en ce que le capot (6) possède une épaisseur de 0,5-3 mm, de préférence 2 mm.

5. Capot pour passage de roue selon l'une des revendications 1 à 4, caractérisé en ce que la largeur des fentes (8) est égale à 0,2-1 mm, de préférence à 0,4 mm, et la longueur des fentes (8) est égale à 10-60 mm, de préférence à 20-40 mm.
